# EUROPEAN PATENT SPECIFICATION

(11) **EP 2 690 825 B1**
(45) Date of publication and mention of the grant of the patent: **01.03.2017**
(21) Application number: 12763832.8
(22) Date of filing: 26.03.2012
(51) Int. Cl.: H04L 12/18

(54) **RELAY MULTICAST TRANSMISSION METHOD AND RELAY MULTICAST TRANSMISSION SYSTEM**
RELAIS-MULTICAST-ÜBERTRAGUNGSVERFAHREN, SYSTEM, RELAISAUSWAHLSERVER, RELAISKNOTEN UND ENDGERÄTE DAFÜR
PROCÉDÉ DE TRANSMISSION EN MULTIDIFFUSION À RELAIS, SYSTÈME, SERVEUR DE SÉLECTION DE RELAIS, N UDS RELAIS ET TERMINAUX

(30) Priority: 25.03.2011 CN 201110073731
(43) Date of publication of application: 29.01.2014
(73) Proprietor: China Mobile Communications Corporation, Xicheng District Beijing 100032 (CN)
(72) Inventor: LE, Lifeng, Beijing 100032 (CN); ZHANG, Jianyin, Beijing 100032 (CN); PENG, Jin, Beijing 100032 (CN)
(74) Representative: EP&C
(86) International application number: PCT/CN2012/073053
(87) International publication number: WO 2012/130124

(56) References cited:
- EP-A1- 1 903 715
- CN-A- 1 839 590
- CN-A- 1 839 590
- CN-A- 101 087 246
- US-A1- 2009 199 283
- WEI WANG ZTE CORPORATION CHINA: "Proposal for adding general relay procedure in Y.dsnrf;C 772", ITU-T DRAFT ; STUDY PERIOD 2009-2012, INTERNATIONAL TELECOMMUNICATION UNION, GENEVA ; CH, vol. ngn-gsi ; 19/13, 27 August 2010 (2010-08-27), pages 1-3, XP017566867, [retrieved on 2010-08-27]
- CHINA MOBILE: "Proposal for adding Relay Node Selection for Multicast in Scenario 2 in Y.dsnrf;C 1061", ITU-T DRAFT ; STUDY PERIOD 2009-2012, INTERNATIONAL TELECOMMUNICATION UNION, GENEVA ; CH, vol. 19/13, 10 October 2011 (2011-10-10), pages 1-2, XP017469553, [retrieved on 2011-10-10]

## Description

### TECHNICAL FIELD

The present invention relates to the communication technology, more particularly, relates to a relay multicast transmission method and a relay multicast transmission system.

### BACKGROUND

The multicast technology is a network technology that allows one or more terminals (source terminals) to transmit a packet of the same data to multiple terminals. As a point-to-multipoint communication, multicast is one of the effective ways to save network bandwidth. Currently, multicast technology is widely used in network audio/video broadcast, AOD/VOD, network video conference, multimedia distance education, "push" technology (such as stock quotes, etc.) and virtual reality game, etc..

In addition, the routing of data in the communication is usually forwarded according to the default route. However, due to the operator's policy or the congestion of the default route, it might lead to the default route being not the best path, thereby affecting the quality of real-time services such as voice service, etc.. Data relay technology is a quality assurance technology that is usually adopted in the communication system. In which, relay equipments are incorporated into the communication link to change the default route, the data is transmitted to the next level equipments via the relay equipments. By adopting the data relay, combining with the network topology information, the data transmission delay as well as the packet losses and jitters caused by the network congestion can be reduced.

Currently, the relay-based multicast technology has also been widely used. However, according to the relay multicast method in the prior art, in order to sending data to multiple destinations, the source UE has to transit multiple copies of data to the relay node RN, i.e., multiple UE-RN data transmission path resources are needed to be occupied, resulting in a waste of network transmission resources.

European patent application EP 1 903 715 A1 disclosed the "Method and system for processing multicast in unicast-based VoIP system". Document titled "Proposal for adding general relay procedure in Y.dsnrf" (ITU-T DRAFT; STUDY PERIOD 2009-2012, INTERNATIONAL TELECOMMUNICATION UNIT, GENEVA; CH, vol. ngn-gsi; 19/13, 27 August 2010 (2010-08-27), page 1-3, XP017566867) describes "Relay Procedure controlled by Control Nodes" in section 8.1.1.1. Chinese patent application CN 1839590A disclosed the "Method and apparatus for providing multimedia broadcast multicast service data to a subscriber to a multimedia broadcast multicast service".

### SUMMARY

The purpose of the present invention is to provide a multicast transmission method based on relay, which can improve the defects of the prior art described above, so as to reduce the occupation of the relay transmission resources and increase the network transmission efficiency.

According to one aspect of the present invention, it is disclosed a method for relay multicast transmission, comprising: sending, by a first terminal, a relay selection request to a relay selection server; determining, by the relay selection server, according to the relay selection request, multiple second terminals which will communicate with the first terminal, and a multicast relay node corresponding to at least two second terminals, and sending a relay multicast notification to the first terminal and the multicast relay node separately; sending, by the first terminal, a piece of data to the multicast relay node, according to the received relay multicast notification; and according to the received relay multicast notification, copying, by the multicast relay node, the data from the first terminal, and multicasting the data to the at least two second terminals corresponding to the multicast relay node. In case of a multi-part conference, the relay selection request includes a multi-part conference request for that the first terminal will proceed a multi-part conference with multiple second terminals, the first terminal and any of the multiple second terminals can become a source terminal or a target terminal of the multicasting data, and the relay selection request includes addresses of the multiple second terminals that will communicate with the first terminal. The relay selection server further sends a relay multicast notification to at least two second terminals corresponding to the multicast relay node separately according to the relay selection request; and according to the received relay multicast notification, either of the at least two second terminals sends a piece of data to the multicast relay node, the multicast relay node copies the data from the either of the second terminals and multicasts the data to the other of the at least two second terminals and the first terminal.

According to another aspect of the present invention, it is disclosed a relay multicast transmission system, comprising: a first terminal, second terminals, a relay selection server, a relay node, wherein the first terminal, configured to send a relay selection request to the relay selection server; the relay selection server, configured to determine, according to the relay selection request, multiple second terminals which will communicate with the first terminal, the multicast relay node corresponding to at least two second terminals, and send a relay multicast notification to the first terminal and the multicast relay node separately; the first terminal is further configured to send a piece of data to the multicast relay node, according to the received relay multicast notification; and the multicast relay node, configured to, according to the received relay multicast notification, copy the data from the first terminal and multicast the data to at least two second terminals corresponding to the multicast relay node. In case of a multi-part conference, the relay selection request includes a multi-part conference request for that the first terminal will proceed a multi-part conference with multiple second terminals, the first terminal and any of the multiple second terminals can become a source terminal or a target terminal of the multicasting data, and the relay selection request includes addresses of the multiple second terminals that will communicate with the first terminal. The relay selection server is further configured to send a relay multicast notification to at least two second terminals corresponding to the multicast relay node separately according to the relay selection request; and according to the received relay multicast notification, either of the at least two second terminals is configured to send a piece of data to the multicast relay node, the multicast relay node is configured to copy the data from the either of the second terminals and multicast the data to the other of the at least two second terminals and the first terminal.

According to the above technical solutions provided by the present invention, it is possible to determine the relay nodes corresponding to multiple destination terminals, thus ensuring the source only sends a piece of data to the relay node, and the relay node is able to copy this data and multicast the data to multiple corresponding destination terminals, thus, saving of channel resource between the source and the relay node and the increase of transmission efficiency are achieved.

### BRIEF DESCRIPTION OF THE DRAWINGS

Figure 1 illustrates a relay multicast transmission method according to one embodiment of the present disclosure;
Figure 2 illustrates a relay multicast transmission method used in the scene of a multi-party conference according to the present disclosure;
Figure 3 illustrates a schematic diagram of the multicast transmission system transmits data according to the present disclosure;
Figure 4 illustrates a relay selection server according to one embodiment of the present disclosureapplication;
Figure 5 illustrates a relay node according to one embodiment of the present disclosure;
Figure 6 illustrates a terminal according to one embodiment of the present disclosure.

### DETAILED DESCRIPTION

Next, the disclosed relay multicast transmission method and relay multicast transmission system of the present invention will be described in detail with reference to the figures. For simplicity, in the description of each embodiment, same or similar reference numerals are used to refer the same or similar apparatus.

As described above, in the prior art, while it is necessary to perform the multicast data based on relay, even if there is a relay node corresponding to multiple destination terminals, the source will send multiple copies of data to the relay node, and the relay node sends these multiple copies of the data to the multiple corresponding destination terminals separately. Such mechanism of transmission causes the waste of network transmission resources.

For the relay multicast transmission method, it is possible to determine the relay node corresponding to multiple destination terminals, thereby the source only sends a piece of data to the relay node, whereas the relay node is able to copy this piece of data and multicasts the data to multiple corresponding destination terminals. Obviously, the relay multicast transmission method saves the channel resources between the source and the relay node, and increases the transmission efficiency.

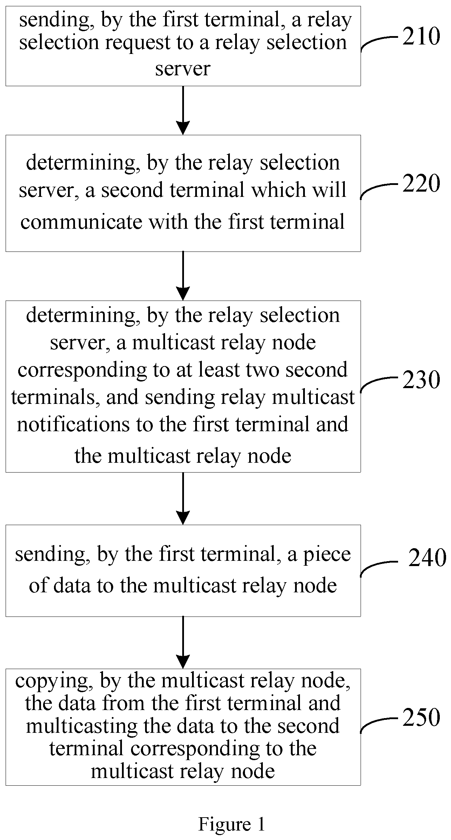

Figure 1 shows a relay multicast transmission method according to one embodiment of the present disclosure. As shown in Figure 1, when the first terminal (source terminal) will send multicast data to the second terminal (destination terminal), according to the relay multicast transmission method of the present disclosure, in step 210, the first terminal sends a relay selection request to the relay selection server. Wherein, the relay selection request includes a request for that the first terminal will proceed multicasts communicate with the multiple second terminals, in addition, the addresses of the multiple second terminals which will communicate with the first terminal can also be included. For example, the relay selection request may include a request for that the first terminal will multicast data to the multiple second terminals, as well as the addresses of the second terminals described above.

In step 220, the relay selection server determines, according to the relay selection request, multiple second terminals which will communicate with the first terminal. In addition, the relay selection server is also able to select the corresponding relay node of the multiple second terminals separately. For example, the relay selection server is able to select the corresponding relay node of the second terminals according to the addresses of the determined multiple second terminals.

In step 230, the relay selection server determine the multicast relay node corresponding to at least two second terminals, and sends a relay multicast notification to the first terminal and the multicast relay node separately. Wherein, the multicast relay node is referring to the relay node which corresponding to at least two second terminals, i.e., the multicast relay node can provide data relaying service for at least two second terminals.

According to one embodiment, the relay multicast notification includes an indication of the data which is multicasting from the first terminal to at least two second terminals corresponding to the multicast relay node via the multicast relay node. In addition, it will be appreciated that the relay multicast notification which was sent to the first terminal can further includes the address of the multicast relay node, and the addresses of at least two second terminals corresponding to the multicast relay node. The relay multicast notification which was sent to the multicast relay node can further includes the address of the first terminal, and the addresses of at least two second terminals corresponding to the multicast relay node.

In step 240, the first terminal sends a piece of data to the multicast relay node, according to the received relay multicast notification. That is, the first terminal learns about the at least two corresponding second terminals thereof according to the received relay multicast notification, therefore, in order to achieve sending data to at least two second terminals corresponding to the multicast relay node, the first terminal only sends a piece of data to the multicast relay node.

In step 250, according to the received relay multicast notification, the multicast relay node copies the data from the first terminal, and multicasts the data to at least two corresponding second terminals. That is, the multicast relay node learns about at least two corresponding second terminals according to the received relay multicast notification, therefore, the multicast relay node copies the data from the first terminal and multicasts the data to at least two corresponding second terminals when proceeding the data relay for the first terminal. According to one embodiment, in order to increase efficiency, after the multicast relay node received a notification from the relay selection server, the multicast relay node can reserve channel resources for at least two corresponding second terminals.

It can be seen, the relay multicast method can determine the multicast relay node which corresponding to at least two second terminals, thereby, the first terminal only needs to send a piece of data to the multicast relay node, and the multicast relay node copies the data and multicasts the data to second terminals corresponding to the multicast relay node, thereby increases the transmission efficiency.

In addition, in the scene of a multi-part conference, besides the need for the first terminal to multicast data to the multiple second terminals, it also necessary for the first terminal to establish a multi-part conference with multiple second terminals, at this time, the first terminal and any terminal of multiple second terminals can become the source terminal or target terminal of the multicasting data.

According to one embodiment, in the scene of multi-part conference, the relay selection request which was sent from the first terminal to the relay selection server can include a request for that the first terminal will proceed a multi-part conference with multiple second terminals, furthermore, the request can also include the addresses of multiple second terminals that will communicate with the first terminal. According to relay selection request, the relay selection server can further sends the relay multicast notification to at least two second terminals corresponding to the multicast relay node separately; and according to the received relay multicast notification, either of the at least two second terminals sends a piece of data to the multicast relay node, the multicast relay node copies the data from the either of the second terminals, and multicasts the data to the other one of the at least two second terminals and the first terminal. Wherein, the relay multicast notification can include an indication of the data which is multicasting by the first terminal and the at least two second terminals to each other via the multicast relay node.

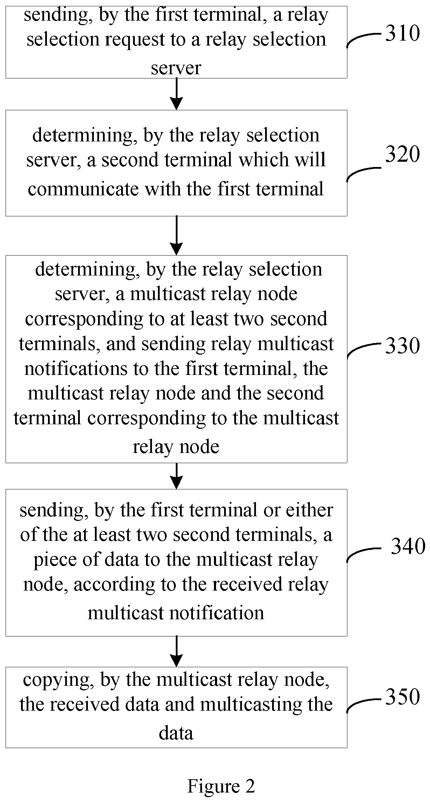

Figure 2 shows a relay multicast transmission method used in the scene of multi-part conference, according to this method, a multi-part conference can be established between the first terminal and multiple second terminals.

As shown, in step 310, the first terminal sends a relay selection request to the relay selection server. In the present embodiment, the relay selection request can include a request for that the first terminal will proceed a multi-part conference with the multiple second terminals, and the relay selection request can also include the addresses of multiple second terminals which will communicate with the first terminal.

In step 320, the relay selection server determines the multiple second terminals which will communicate with the first terminal, according to relay selection request.

In step 330, the relay selection server determines the multicast relay node corresponding to at least two second terminals, and sends a relay multicast notification to the first terminal, the multicast relay node, and the at least two second terminal corresponding to the multicast relay node separately.

According to one embodiment, the relay multicast notification can include an indication of the data which is multicasting by the first terminal and the at least two second terminals to each other via the multicast relay node. In addition, it will be appreciated that the relay multicast notification that was sent to the first terminal can further include the address of the multicast relay node, and the addresses of the at least two second terminals corresponding to the multicast relay node. The relay multicast notification that was sent to the multicast relay node can further include the address of the first terminal, and the addresses of at least two second terminals corresponding to the multicast relay node. The relay multicast notification that was sent to some second terminal which is corresponding to the multicast relay node can further include the address of the first terminal, the address of the multicast relay node, and the addresses of other second terminals which are corresponding to the multicast relay node.

In step 340, the first terminal or either of the at least two second terminals which are corresponding to the multicast relay node sends a piece of data to the multicast relay node, according to the received relay multicast notification.

In step 350, according to the received relay multicast notification, the multicast relay node copies the data from the first terminal and multicasts the data to at least two second terminals corresponding to the multicast relay node, or copies the data from either of the at least two second terminals corresponding to the multicast relay node, and multicasts the data to other corresponding second terminals and the first terminal.

According to the relay multicast method of the present embodiment, it is able to determine the multicast relay node which is corresponding to at least two second terminals, thereby the first terminal or either of the at least two second terminals that are corresponding to the multicast relay node only needs to send a piece of data to the multicast relay node, and the multicast relay node copies this data and multicasts the data to other corresponding terminals, thereby increasing the transmission efficiency.

According to another aspect, a relay multicast transmission system is provided, the system comprising: a relay selection server, a relay node, a first terminal and the second terminal. Wherein the first terminal sends a relay selection request to the relay selection server; the relay selection server determines, according to the relay selection request, multiple second terminals which will communicate with the first terminal, determines the multicast relay node which is corresponding to at least two second terminals, and sends a relay multicast notification to the first terminal and multicast relay node separately; the first terminal sends a piece of data to the multicast relay node according to the received relay multicast notification; and according to the received relay multicast notification, the multicast relay node copies the data from the first terminal and multicasts the data to at least two corresponding second terminals.

In the scene of a multi-part conference, the relay selection server can further send a relay multicast notification to at least two second terminals which are corresponding to the multicast relay node separately; either of the at least two second terminals sends a piece of data to the multicast relay node according to the received relay multicast notification, the multicast relay node copies the data from the either of the second terminals and multicasts the data to the other of the at least two second terminals, and the first terminal according to the received relay multicast notification.

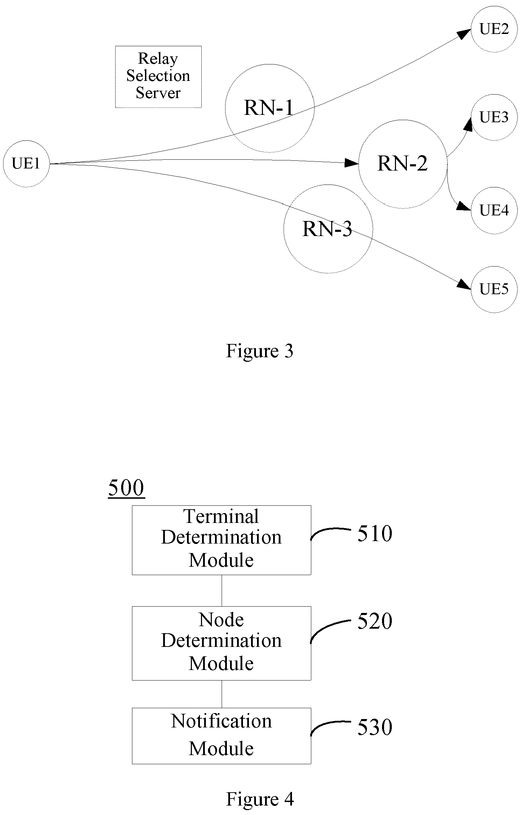

Figure 3 shows a schematic diagram of the multicast transmission system transmits data. As shown, by the relay multicast system, the relay selection server is able to determine the relay node RN2 is the multicast relay node corresponding to terminals UE3 and UE4, and the relay selection server sends relay multicast notifications to the terminal UE1 and the multicast relay node RN2. Terminal UE1 only sends one piece of data to the multicast relay node RN2 according to the received notification, while the multicast relay node RN2 being able to reserve two channel resources for the terminal UE3 and the terminal UE4, and after received the data from terminal UE1, the multicast relay node RN2 copies the data and multicasts the data to the terminal UE3 and the terminal UE4. In addition, it can be appreciated that, for other relay nodes (non-multicast relay node) and the corresponding terminals thereof, the relay selection server is operated in the manner of the prior art. For example, the relay selection server notify the terminal UE1 to transfer data to terminal UE2 via relay node RN1, and notify the relay node RN1 to forward the data which is from the terminal UE1 to the terminal UE2. And when there does not exist a multicast relay node, the relay selection server is also operated by adopting the method of the prior art.

Figure 4 shows the relay selection server 500 according to one embodiment. As shown, the relay selection server 500 comprising: a terminal determination module 510, according to the relay selection request from the first terminal, the terminal determination module 510 determines the multiple second terminals which will communicate with the first terminal; node determination module 520, determines the multicast relay node corresponding to at least two second terminals; and notification module 530, sends relay multicast notifications to the first terminal and the multicast relay node separately.

According to one embodiment, in the scene in which the first terminal will multicast data to the second terminals, the relay multicast notification can include: an indication of the data which is multicasting by the first terminal to at least two second terminals corresponding to the multicast relay node via the multicast relay node.

According to another embodiment, in the scene in which the first terminal will establish a multi-part conference with the second terminals, the notification module 530 can further send relay multicast notifications to at least two second terminals corresponding to the multicast relay node separately. At this point, the relay multicast notification can include an indication of the data which is multicasting by the first terminal and at least two second terminals described above to each other via the multicast relay node.

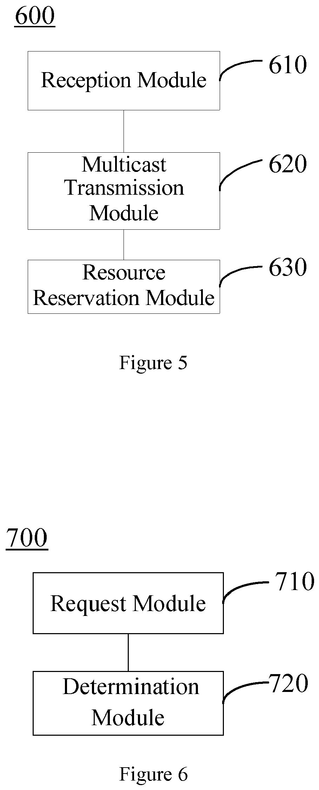

Figure 5 shows a relay node 600 according to one embodiment. As shown, the relay node 600 comprising: a reception module 610, receives the relay multicast notification from the relay selection server; and a multicast transmission module 620, according to the received relay multicast notification, the multicast transmission module copies the data from the first terminal and multicasts the data to at least two second terminals corresponding to the relay node. According to one embodiment, the relay node can further include a resource reservation module 630, to reserve channel resources for multiple second terminals corresponding to the relay node, according to the received notification.

In addition, in the scene where the first terminal will establish a multi-part conference with the second terminals, the multicast transmission module 620 can, according to the received relay multicast notification, copy the data from either of the at least two second terminals and multicasts the data to the other one of the at least two second terminals and the first terminal

Figure 6 shows a terminal 700 according to one embodiment. As shown, the terminal 700 comprising: a request module 710, to send a relay selection request to the relay selection server; and a determination module 720, to receive the relay multicast notification from the relay selection server, according to the relay multicast notification, the determination module 720 determines the multicast relay node and at least two second terminals corresponding to the multicast relay node, and sends a piece of data to the multicast relay node.

According to another embodiment, the relay selection request which is sent by the request module 710 of the terminal 700 to the relay selection server includes a request for that the first terminal will multicast data to multiple second terminals. The relay multicast notification received by the determine module 720 of terminal 700 from the relay selection server includes an indication of the data which is multicasting by the first terminal to at least two second terminals corresponding to the multicast relay node via the multicast relay node.

According to another embodiment, the relay selection request which is sent by the request module 710 of the terminal 700 to the relay selection server includes a request for that the first terminal will proceed a multi-part conference with multiple second terminals. The relay multicast notification received from the determination module 720 of terminal 700 to the relay selection server includes an indication of the data which is multicasting by the first terminal and at least two second terminals to each other via the multicast relay node.

Exemplary embodiments of the present invention have been described above with reference to the accompanying drawings. A person skilled in the art should understand that the above embodiments are only cited examples for illustrative purposes, instead of for restricting, any modification, equivalent replacement, etc. which is made in the scope of the protection of the teachings and claims, should be included within the scope of the present invention as defined in the appended claims.

## Claims

1. A method for relay multicast transmission, comprising:
sending, by a first terminal (700), a relay selection request to a relay selection server (500);
determining, by the relay selection server (500), according to the relay selection request, multiple second terminals which will communicate with the first terminal, and a multicast relay node (600) corresponding to at least two second terminals, and sending a relay multicast notification to the first terminal (700) and the multicast relay node (600) separately;
sending, by the first terminal (700), a piece of data to the multicast relay node (600), according to the received relay multicast notification; and
according to the received relay multicast notification, copying, by the multicast relay node (600), the data from the first terminal (700), and multicasting the data to the at least two second terminals corresponding to the multicast relay node (600),
**characterized in that**, in case of a multi-part conference, the relay selection request includes a multi-part conference request for that the first terminal (700) will proceed a multi-part conference with multiple second terminals, the first terminal (700) and any of the multiple second terminals can become a source terminal or a target terminal of the multicasting data, and the relay selection request includes addresses of the multiple second terminals that will communicate with the first terminal,
the relay selection server (500) further sends a relay multicast notification to at least two second terminals corresponding to the multicast relay node (600) separately according to the relay selection request; and according to the received relay multicast notification, either of the at least two second terminals sends a piece of data to the multicast relay node (600), the multicast relay node (600) copies the data from the either of the second terminals and multicasts the data to the other of the at least two second terminals and the first terminal (700).

2. The method according to claim 1, **characterized in that** the relay multicast notification comprising: an indication of the data which is multicast by the first terminal (700) and the at least two second terminals to each other via the multicast relay node (600).

3. A relay multicast transmission system, comprising: a first terminal (700), second terminals, a relay selection server (500), a relay node, wherein,
the first terminal (700), configured to send a relay selection request to the relay selection server(500);
the relay selection server (500), configured to determine, according to the relay selection request, multiple second terminals which will communicate with the first terminal (700), the multicast relay node (600) corresponding to at least two second terminals, and send a relay multicast notification to the first terminal (700) and the multicast relay node (600) separately;
the first terminal (700) is further configured to send a piece of data to the multicast relay node (600), according to the received relay multicast notification; and
the multicast relay node (600), configured to, according to the received relay multicast notification, copy the data from the first terminal (700) and multicast the data to at least two second terminals corresponding to the multicast relay node (600);
**characterized in that**, in case of a multi-part conference, the relay selection request includes a multi-part conference request for that the first terminal (700) will proceed a multi-part conference with multiple second terminals, the first terminal (700) and any of the multiple second terminals can become a source terminal or a target terminal of the multicasting data, and the relay selection request includes addresses of the multiple second terminals that will communicate with the first terminal,
the relay selection server(500) is further configured to send a relay multicast notification to at least two second terminals corresponding to the multicast relay node (600) separately according to the relay selection request; and according to the received relay multicast notification, either of the at least two second terminals is configured to send a piece of data to the multicast relay node (600), the multicast relay node (600) is configured to copy the data from the either of the second terminals and multicast the data to the other of the at least two second terminals and the first terminal (700).

## Patentansprüche

1. Relay-Multicast-Übertragungsverfahren, umfassend:
Senden, durch einen ersten Terminal (700), von einer Relay-Auswahlanfrage an einen Relay-Auswahlserver (500);
Bestimmen, durch den Relay-Auswahlserver (500), gemäß der Relay-Auswahlanfrage, von mehreren zweiten Terminals, die mit dem ersten Terminal kommunizieren, und von einem Multicast-Relay-Knoten (600), der mindestens zwei zweiten Terminals entspricht, und getrenntes Senden von einer Relay-Multicast-Meldung zu dem ersten Terminal (700) und dem Multicast-Relay-Knoten (600);
Senden, durch den ersten Terminal (700), von einem Datenstück zu dem Multicast-Relay-Knoten (600), gemäß der empfangenen Relay-Multicast-Meldung; und
gemäß der empfangenen Relay-Multicast-Meldung, Kopieren, durch den Multicast-Relay-Knoten (600), von den Daten von dem ersten Terminal (700) und Multicasten der Daten zu den mindestens zwei zweiten Terminals, die dem Multicast-Relay-Knoten (600) entsprechen,
**dadurch gekennzeichnet, dass** im Falle einer Mehrteilnehmerkonferenz die Relay-Auswahlanfrage eine Mehrteilnehmerkonferenzanfrage umfasst, für die der erste Terminal (700) mit einer Mehrteilnehmerkonferenz mit mehreren zweiten Terminals fortfahren wird, wobei der erste Terminal (700) und irgendeiner von den mehreren zweiten Terminals für die Multicasting-Daten zu einem Quellenterminal oder Zielterminal werden kann, und die Relay-Auswahlanfrage Adressen von den mehreren zweiten Terminals umfasst, die mit dem ersten Terminal kommunizieren werden,
dass der Relay-Auswahlserver (500) ferner eine Relay-Multicast-Meldung getrennt an mindestens zwei zweite Terminals sendet, die dem Multicast-Relay-Knoten (600) entsprechen, und zwar gemäß der Relay-Auswahlanfrage; und
dass gemäß der empfangenen Relay-Multicast-Meldung einer von den mindestens zwei zweiten Terminals ein Datenstück zu dem Multicast-Relay-Knoten (600) sendet, wobei der Multicast-Relay-Knoten (600) die Daten von dem einen der zweiten Terminals kopiert und die Daten zu dem anderen der mindestens zwei zweiten Terminals und dem ersten Terminal (700) multicastet.

2. Verfahren nach Anspruch 1, **dadurch gekennzeichnet, dass** die Relay-Multicast-Meldung das Folgende umfasst: eine Angabe für die Daten, die durch den ersten Terminal (700) und die mindestens zwei zweiten Terminals zueinander über den Multicast-Relay-Knoten (600) multigecastet werden.

3. Relay-Multicast-Übertragungssystem, umfassend: einen ersten Terminal (700), zweite Terminals, einen Relay-Auswahlserver (500), einen Relay-Knoten, wobei
der erste Terminal (700) konfiguriert ist, eine Relay-Auswahlanfrage an den Relay-Auswahlserver (500) zu senden;
der Relay-Auswahl-Server (500) konfiguriert ist, gemäß der Relay-Auswahlanfrage, mehrere zweite Terminals, die mit dem ersten Terminal (700) kommunizieren werden, und den Multicast-Relay-Knoten (600), der mindestens zwei zweiten Terminals entspricht, zu bestimmen und zu dem ersten Terminal (700) und dem Multicast-Relay-Knoten (600) getrennt eine Relay-Multicast-Meldung zu senden;
der erste Terminal (700) ferner konfiguriert ist, ein Datenstück zu dem Multicast-Relay-Knoten (600), gemäß der empfangenen Relay-Multicast-Meldung, zu senden; und
der Multicast-Relay-Knoten (600) konfiguriert ist, gemäß der empfangenen Relay-Multicast-Meldung, die Daten von dem ersten Terminal (700) zu kopieren und die Daten zu mindestens zwei zweiten Terminals, die dem Multicast-Relay-Knoten (600) entsprechen, zu multicasten;
**dadurch gekennzeichnet, dass** im Falle einer Mehrteilnehmerkonferenz die Relay-Auswahlanfrage eine Mehrteilnehmerkonferenzanfrage umfasst, für die der erste Terminal (700) mit einer Mehrteilnehmerkonferenz mit mehreren zweiten Terminals fortfahren wird, wobei der erste Terminal (700) und irgendeiner von den mehreren zweiten Terminals für die Multicasting-Daten zu einem Quellenterminal oder Zielterminal werden kann, und die Relay-Auswahlanfrage Adressen von den mehreren zweiten Terminals umfasst, die mit dem ersten Terminal kommunizieren werden,
dass der Relay-Auswahlserver (500) ferner konfiguriert ist, eine Relay-Multicast-Meldung getrennt an mindestens zwei zweite Terminals zu senden, die dem Multicast-Relay-Knoten (600) entsprechen, und zwar gemäß der Relay-Auswahlanfrage; und
dass gemäß der empfangenen Relay-Multicast-Meldung einer von den mindestens zwei zweiten Terminals konfiguriert ist, ein Datenstück zu dem Multicast-Relay-Knoten (600) zu senden, wobei der Multicast-Relay-Knoten (600) konfiguriert ist, die Daten von dem einen der zweiten Terminals zu kopieren und die Daten zu dem anderen der mindestens zwei zweiten Terminals und dem ersten Terminal (700) zu multicasten.

## Revendications

1. Procédé de transmission à multidiffusion par relais comprenant les étapes consistant à :
envoyer, au moyen d'un premier terminal (700), une demande de sélection de relais à un serveur de sélection de relais (500) ;
déterminer, au moyen du serveur de sélection de relais (500), conformément à la demande de sélection de relais, une pluralité de deuxièmes terminaux qui communiquent avec le premier terminal et un noeud de relais de multidiffusion (600) correspondant à au moins deux deuxièmes terminaux et envoyer une notification de multidiffusion par relais au premier terminal (700) et au noeud de relais de multidiffusion (600) séparément ;
envoyer, au moyen du premier terminal (700), une donnée au noeud de relais de multidiffusion (600), conformément à la notification de multidiffusion par relais reçue ; et
conformément à la notification de multidiffusion par relais reçue, copier, au moyen du noeud de relais de multidiffusion (600), la donnée provenant du premier terminal (700), et effectuer une multidiffusion de la donnée vers au moins deux deuxièmes terminaux correspondant au noeud de relais de multidiffusion (600),
**caractérisé en ce que**, dans le cas d'une conférence multipartite, la demande de sélection de relais comprend une demande de conférence multipartite pour que le premier terminal (700) effectue une conférence multipartite avec une pluralité de deuxièmes terminaux, le premier terminal (700) et l'un quelconque de la pluralité de deuxièmes terminaux peuvent devenir un terminal source ou un terminal cible de la donnée de multidiffusion et la demande de sélection de relais comprend des adresses de la pluralité de deuxièmes terminaux qui communiqueront avec le premier terminal,
le serveur de sélection de relais (500) envoie en outre une notification de multidiffusion par relais à au moins deux deuxièmes terminaux correspondant au noeud de relais de multidiffusion (600) séparément conformément la demande de sélection de relais ; et conformément à la notification de multidiffusion par relais reçue, l'un ou l'autre des au moins deux deuxièmes terminaux envoie une donnée au noeud de relais de multidiffusion (600), le noeud de relais de multidiffusion (600) copie la donnée provenant de l'un ou l'autre des deuxièmes terminaux et effectue une multidiffusion de la donnée vers l'autre des au moins deux deuxièmes terminaux et le premier terminal (700).

2. Procédé selon la revendication 1, **caractérisé en ce que** la notification de multidiffusion par relais comprend : une indication de la donnée qui est multidiffusée par le premier terminal (700) et les au moins deux deuxièmes terminaux entre eux par l'intermédiaire du noeud de relais de multidiffusion (600).

3. Système de transmission à multidiffusion par relais, comprenant : un premier terminal (700), des deuxièmes terminaux, un serveur de sélection de relais (500), un noeud de relais, système dans lequel :
le premier terminal (700) est configuré pour envoyer une demande de sélection de relais au serveur de sélection de relais (500) ;
le serveur de sélection de relais (500) est configuré pour déterminer, conformément à la demande de sélection de relais, une pluralité de deuxièmes terminaux qui communiqueront avec le premier terminal (700), le noeud de relais de multidiffusion (600) correspondant à au moins deux deuxièmes terminaux et enverront une notification de multidiffusion par relais au premier terminal (700) et au noeud de relais de multidiffusion (600) séparément ;
le premier terminal (700) est en outre configuré pour envoyer une donnée au noeud de relais de multidiffusion (600), conformément à la notification de multidiffusion par relais reçue ; et
le noeud de relais de multidiffusion (600) est configuré pour copier, conformément à la notification de multidiffusion par relais reçue, la donnée provenant du premier terminal (700) et effectuer une multidiffusion de la donnée vers au moins deux deuxièmes terminaux correspondant au noeud de relais de multidiffusion (600) ;
**caractérisé en ce que**, dans le cas d'une conférence multipartite, la demande de sélection de relais comprend une demande de conférence multipartite pour que le premier terminal (700) effectue une conférence multipartite avec une pluralité de deuxièmes terminaux, le premier terminal (700) et l'un quelconque de la pluralité de deuxièmes terminaux peut devenir un terminal source ou un terminal cible de la donnée de multidiffusion, et la demande de sélection de relais comprend des adresses de la pluralité de deuxièmes terminaux qui communiqueront avec le premier terminal,
le serveur de sélection de relais (500) est en outre configuré pour envoyer une notification de multidiffusion par relais à au moins deux deuxièmes terminaux correspondant au noeud de relais de multidiffusion (600) séparément conformément à la demande de sélection de relais ; et conformément à la notification de multidiffusion de relais reçue, l'un ou l'autre des au moins deux deuxièmes terminaux est configuré pour envoyer une donnée au noeud de relais de multidiffusion (600), le noeud de relais de multidiffusion (600) est configuré pour copier la donnée provenant de l'un ou l'autre des deuxièmes terminaux et effectuer une multidiffusion de la donnée vers l'autre des au moins deux deuxièmes terminaux et le premier terminal (700).
